# FASCICULE DE BREVET EUROPEEN

(11) **EP 1 066 435 B1**
(45) Date de publication et mention de la délivrance du brevet: **06.02.2002**
(21) Numéro de dépôt: 99909032.7
(22) Date de dépôt: 18.03.1999
(51) Int. Cl.: E04H 4/12

(54) **BLOC COMPACT DE FILTRATION POUR BASSIN DE PISCINE**
KOMPAKTER FILTERBLOCK FÜR SCHWIMMBECKEN
COMPACT FILTERING BLOCK FOR SWIMMING POOL

(30) Priorité: 23.03.1998 FR 9803790
(43) Date de publication de la demande: 10.01.2001
(73) Titulaire: PISCINES DESJOYAUX SA, 42480 La Fouillouse (FR)
(72) Inventeur: DESJOYAUX, Jean, Louis, F-42580 L'Etrat (FR); DESJOYAUX, Pierre, Louis, F-42480 La Fouillouse (FR); JANDROS, Catherine, F-42580 L'Etrat (FR)
(74) Mandataire: Thivillier, Patrick
(86) Numéro de dépôt international: FR9900617
(87) Numéro de publication internationale: WO9949156

(56) Documents cités:
- EP-A- 0 145 619
- WO-A-96/12075
- DE-A- 2 751 114

## Description

L'invention se rattache au secteur technique des moyens de filtration de l'eau d'un bassin de piscine.

Il est connu d'utiliser pour la filtration de l'eau d'un bassin de piscine, des éléments indépendants sous forme de blocs compacts intégrant d'une part, les moyens de filtration et, d'autre part, les moyens de pompage, pour l'aspiration et le refoulement de l'eau. Généralement, ces blocs comprennent un compartiment immergé dans l'eau, conformé pour être en communication avec cette eau au moyen d'au moins une bouche connue sous le nom de SKIMMER. Ce compartiment reçoit intérieurement les différents moyens de filtration de tous types connus et appropriés. L'autre compartiment reçoit les moyens de pompage pour permettre l'aspiration et le refoulement de l'eau du bassin au moyen d'un système de conduites appropriées. Le compartiment recevant les moyens de pompage est situé à l'extérieur du bassin de la piscine. Les deux compartiments peuvent être réunis par des éléments rapportés ou constituer un ensemble unitaire. Dans la plupart des cas, ce bloc est conformé en section pour chevaucher les parois du bassin de la piscine.

Ce bloc est donc destiné à être rapporté et monté après la construction du bassin de piscine en tant que tel. Ainsi, les conduites d'aspiration et de refoulement entre les moyens de filtration et de pompage passent au dessus du rebord supérieur de l'élément de paroi considéré. Ce type de bloc peut être illustré à titre indicatif, nullement limitatif par l'enseignement du brevet FR-A-2544857.

On connaît également des panneaux ou escaliers conformés pour remplir les fonctions de filtration, d'aspiration et de refoulement de l'eau et destinés à être montés avec des panneaux constituant l'ensemble du bassin de la piscine.

Cet état de la technique peut être illustré par l'enseignement de la demande de brevet WO 96/12075 qui concerne un panneau filtrant pour bassin de piscine. Ce panneau se présente sous forme d'un bloc compact comprenant deux compartiments internes séparés par une cloison verticale. L'un des compartiments est agencé pour être rempli d'eau et présente des moyens de filtration. L'autre compartiment reçoit des moyens d'aspiration et de refoulement de l'eau du bassin en combinaison avec les moyens de filtration. Ce compartiment est destiné à être positionné à l'extérieur du bassin de la piscine. Le compartiment de filtration est en communication avec l'eau du bassin et présente des agencements de fixation avec des panneaux constituants les parois du bassin de la piscine.

Il ressort de cet état de la technique, que l'aspiration et le refoulement de l'eau du bassin de la piscine, en combinaison avec les moyens de filtration, s'effectuent, soit au moyen de blocs rapportés destinés à être installés après réalisation du bassin de la piscine, soit au moyen de blocs destinés à être intégrés avec les panneaux constituant le bassin de la piscine.

Le problème que se propose de résoudre l'invention, est de proposer un ensemble permettant l'aspiration et l'évacuation de l'eau d'un bassin de piscine en combinaison avec des moyens de filtration, qui puisse indifféremment, soit être rapporté après réalisation du bassin de la piscine, soit être intégré au moment de la réalisation du bassin de la piscine.

Pour que ce type de bloc puisse être rapporté en chevauchement des parois du bassin de la piscine, ou être intégré aux panneaux constitutifs du bassin de la piscine, il a fallu résoudre le problème important de l'étanchéité entre compartiments de pompage et de filtration, étant souligné qu'il n'est pas concevable que l'eau qui se trouve dans le compartiment immergée de filtration puisse passer dans le compartiment extérieur recevant les moyens de pompage.

En l'espèce, si le problème de l'étanchéité est moins important dans le cas d'un bloc destiné à chevaucher les parois de la piscine, ce n'est pas le cas lorsque ce même bloc est destiné à être monté en juxtaposition avec les panneaux adjacents du bassin de la piscine. En effet, dans le cas où le bloc chevauche les parois du bassin de la piscine, ce dernier est automatiquement surélevé par la présence des conduites d'aspiration et de refoulement entre les deux compartiments. Autrement dit, l'espace de séparation entre les deux compartiments se trouve au dessus du niveau supérieur d'eau du bassin.

Par contre, lorsque le bloc est monté en combinaison avec les panneaux adjacents du bassin de la piscine, sans pour autant déborder en hauteur, il est nécessaire de le rabaisser de la distance correspondant à la hauteur de l'espace libre entre les deux compartiments, pour le passage des conduites d'aspiration et de refoulement. Un tel espace libre se trouve très sensiblement au niveau de l'eau du bassin avec, par conséquent, des risques évidents de passage d'eau dans le compartiment de pompage.

Ainsi dans la demande de brevet WO 96/12075, on ne peut totalement exclure le risque de passage accidentel de l'eau dans le compartiment de pompage. En effet, il n'y a pas une totale étanchéité entre le compartiment de filtration et le compartiment de pompage. Il existe au-dessus de la paroi de séparation entre lesdits compartiments un espace. Cet espace est nécessaire pour permettre la libre circulation de l'air en vue du refroidissement du compartiment de pompage.

Compte tenu du problème posé à résoudre et des contraintes à respecter, ce bloc compact de filtration pour bassin de piscine est remarquable en ce que :
- les deux compartiments délimitent transversalement un profil en section apte à chevaucher les parois du bassin de la piscine,
- le compartiment de filtration en communication avec l'eau du bassin, présente des agencements de fixation avec des panneaux constituant les parois du bassin de la piscine,
- les deux compartiments sont séparés par une paroi étanche pour éviter le passage de l'eau du compartiment de filtration dans le compartiment de pompage, de manière à rendre étanche ledit compartiment de pompage par rapport au compartiment de filtration.
- la paroi de séparation présente des agencements de raccordement étanche avec des conduites d'aspiration et de refoulement reliant les moyens de filtration et les moyens d'aspiration et de refoulement ;
- le compartiment de pompage est en communication au niveau de sa partie arrière, avec une goulotte en communication avec l'air extérieur ;
- les deux compartiments sont obturés par un couvercle amovible présentant, au niveau de la goulotte, une pluralité de perforations afin de mettre en communication ladite goulotte avec l'air extérieur

Compte tenu de ces dispositions, il en résulte que les moyens d'aspiration et de refoulement sont ainsi au sec dans le compartiment de pompage, leur aération étant assurée par la goulotte et par les perforations formées dans l'épaisseur du couvercle amovible.

Pour résoudre le problème posé de pouvoir intégrer parfaitement le bloc au moment du montage du panneau du bassin, le couvercle est profilé à son extrémité située du côté du compartiment de filtration, pour assurer une continuité avec la margelle du bassin de la piscine.

L'invention est exposée ci-après plus en détail à l'aide des figures des dessins annexés dans lesquels :

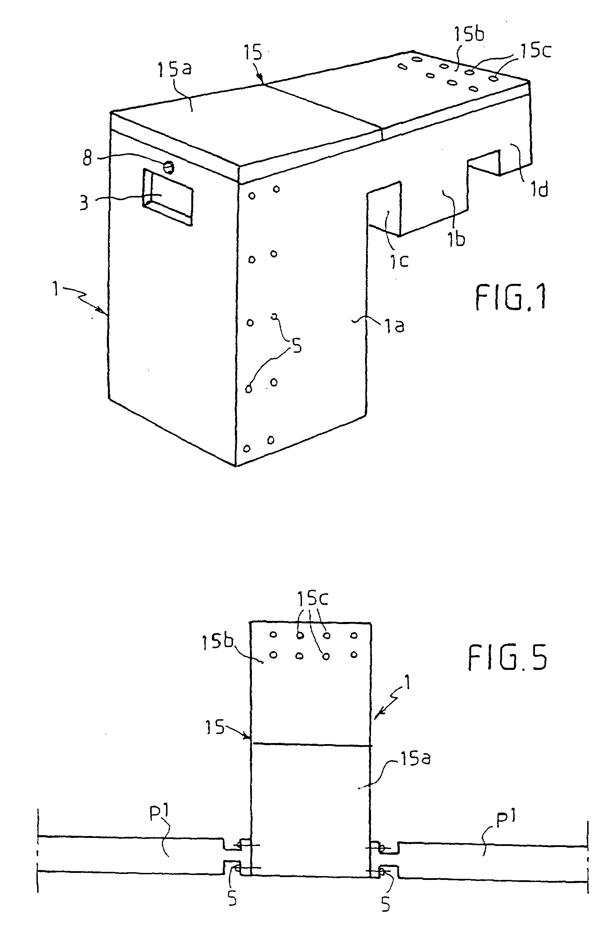

- la figure 1 est une vue en perspective du bloc mixte de filtration selon l'invention
- la figure 2 est une vue en coupe à caractère schématique montrant le montage du bloc en position de chevauchement de l'une des parois du bassin de la piscine.
- la figure 3 est une vue en coupe à caractère schématique montrant le montage du bloc en position de juxtaposition avec les panneaux constitutifs du bassin de la piscine.

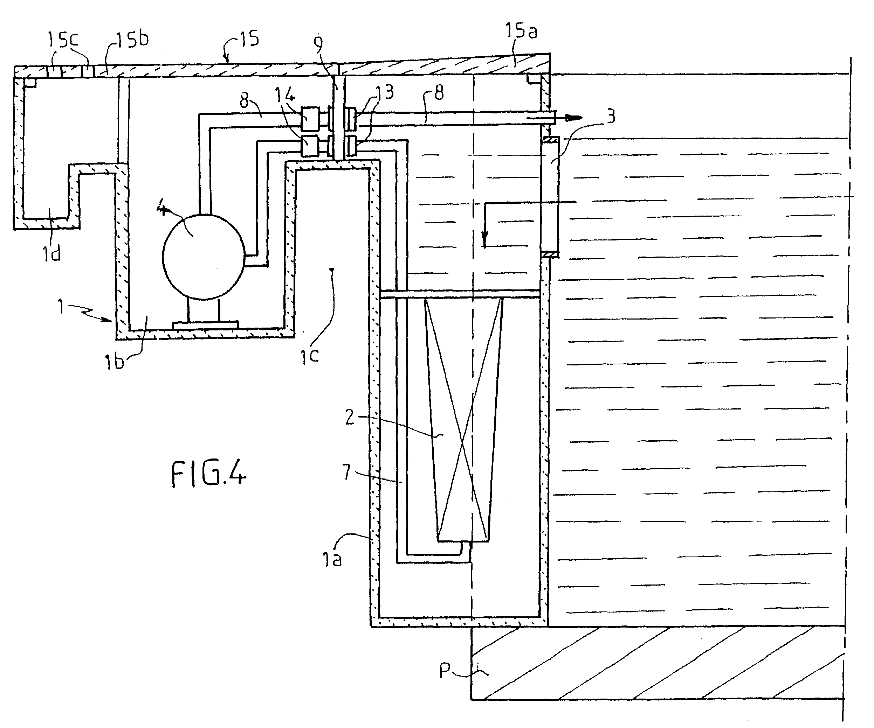

- la figure 4 est une vue en coupe considérée selon la ligne 4.4 de la figure 3.
- la figure 5 est une vue en coupe longitudinale du bloc.
- la figure 6 est, à une échelle plus importante, une vue partielle et en coupe montrant les agencements de raccordement étanche au niveau de la paroi de séparation.

D'une manière connue, le bloc compact de filtration, désigné dans son ensemble par (1), comprend deux compartiments (1a) et (1b) disposés côte à côte l'un derrière l'autre. Le compartiment (1a) reçoit des moyens de filtration (2) de tout type connu et approprié. Ce compartiment (1a) est destiné à être en communication avec l'eau du bassin de la piscine. Ce compartiment (1a) présente au moins une bouche d'entrée ou skimmer (3) disposée facialement ou autrement, afin de permettre l'entrée de l'eau à l'intérieur du compartiment (1a) pour la soumettre de manière connue, au pouvoir filtrant des moyens (2).

Le compartiment (1b) reçoit des moyens (4), notamment sous forme d'au moins une pompe, pour permettre l'aspiration et le refoulement de l'eau du bassin de la piscine, en combinaison avec les moyens de filtration (2). Le compartiment (1b) est destiné à être positionné à l'extérieur du bassin de la piscine.

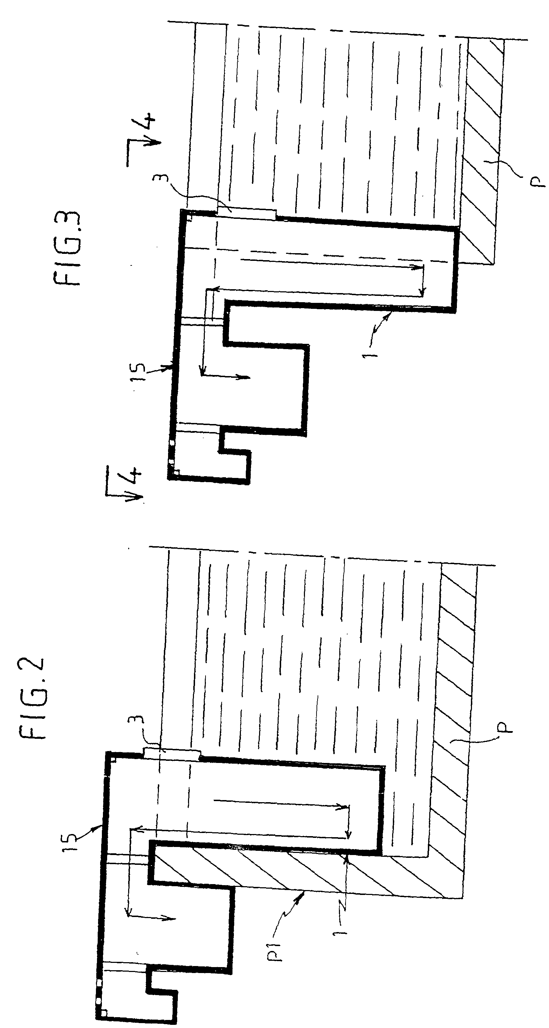

Comme indiqué dans le préambule, le bloc compact de filtration est conformé pour permettre à volonté, soit un montage qui s'effectue après réalisation complète du bassin de la piscine, soit au moment de la réalisation de ce bassin, afin d'être intégré avec les panneaux le constituant. Dans ce but, les deux compartiments (1a) et (1b) délimitent transversalement, un profil en section apte à chevaucher les parois du bassin de la piscine (figure 2), afin de permettre son positionnement rapporté par rapport aux parois (P).

Dans l'exemple illustré les deux compartiments (1a) et (1b) présentent un espace libre (1c) correspondant très sensiblement à l'épaisseur de la paroi (P) du bassin de la piscine, afin de pouvoir positionner le bloc à cheval sur cette dernière, permettant ainsi d'enterrer le compartiment de pompage (1b), tandis que le compartiment de filtration (1a) est immergé dans l'eau du bassin de la piscine.

Suivant une autre caractéristique, le compartiment de filtration (1a) présente des agencements de fixation avec les panneaux (P1) constituant les parois du bassin de la piscine. Dans ce but, les faces latérales opposées du compartiment (1a) présentent des goujons de fixation (5) ou autres susceptibles de coopérer avec des agencements complémentaires que présentent des ailes d'assemblage du panneau (P1). Les goujons (5) peuvent avantageusement être noyés dans l'épaisseur des parois latérales du compartiment (1a).

Il en résulte que le bloc (1) constitue un bloc mixte étant donné qu'il peut être utilisé soit dans le cas d'une piscine déjà existante (figure 2), soit au moment de la réalisation d'une piscine (figure 3).

Compte tenu de cette double possibilité, il convient de gérer le problème de l'étanchéité entre les deux compartiments (1a) et (1b), afin d'interdire que l'eau que contient le compartiment (1a) puisse aller accidentellement dans le compartiment de pompage (1b). Or, il est nécessaire de prévoir entre les deux compartiments (1a) et (1b), un espace de communication (6) permettant le passage des conduites d'aspiration (7) et de refoulement (8). Dans le cas où l'ensemble du bloc est disposé en chevauchement des parois du bassin de la piscine (figure 2), le problème de l'étanchéité entre les deux compartiments est moins important, étant donné que dans cette position de chevauchement, le bloc est rehaussé, l'espace de communication pour le passage des conduites (7) et (8) étant situé au dessus de la paroi considérée du bassin de la piscine (figure 2). Par contre, ce n'est plus le cas lorsque l'ensemble du bloc est destiné à être monté en juxtaposition avec les panneaux (P1) constituant le bassin de la piscine. Dans ce cas, le bloc est rabaissé d'une hauteur correspondant à celle de l'espace de communication (6). Autrement dit, pour un même niveau d'eau dans le bassin de la piscine, cette dernière aura tendance à passer par l'espace de communication (6).

Compte tenu de ce problème important de gérer le niveau d'eau du bassin de la piscine, en ayant pour objectif de pouvoir le maintenir à son maximum, quel que soit le positionnement de l'ensemble du bloc de filtration, c'est-à-dire en chevauchement ou en intégration, les deux compartiments (1a) et (1b) sont séparées par une paroi étanche (9) afin d'éviter tout passage accidentel de l'eau du compartiment de filtration (1a) dans le compartiment de pompage (1b). Cette paroi (9) présente des agencements de raccordement étanche avec les conduites d'aspiration (7) et de refoulement (8) reliant, comme indiqué, les moyens de filtration (2) et les moyens de pompage (4).

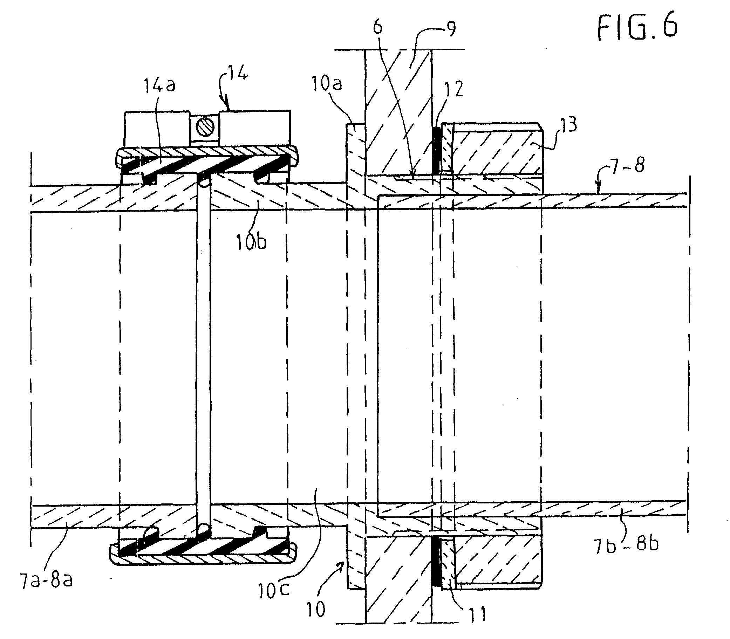

Comme le montre plus particulièrement la figure 6, les agencements de raccordement sont constitués par un manchon (10) qui traverse la paroi étanche (9). Ce manchon (10) présente une collerette d'appui (10a) coopérant avec l'une des faces transversales de la paroi (9), et de l'autre côté de ladite paroi, le manchon (9) présente une rondelle (11) susceptible de prendre appui contre l'autre face de la paroi (9) en combinaison avec un joint d'étanchéité (12) sous l'action d'un écrou de serrage (13). Les deux extrémités du manchon (10) présentent des agencements des conduites d'aspiration et de refoulement (7) et (8) qui sont en deux parties distinctes (7a-7b) et (8a-8b). Par exemple, la partie des conduites (7a) et (8a) connectées à la pompe, sont raccordées en bout du manchon correspondant, au moyen d'un collier de serrage étanche (14) présentant un joint (14a) nervuré pour coopérer avec une nervure circulaire complémentaire (10b) du manchon (10).

De l'autre côté de la paroi étanche (6), les autres parties (7b) et (8b) des conduites d'aspiration et de refoulement sont rendues solidaires de l'alésage (10c) du manchon, notamment par collage (figure 6).

Compte tenu de l'étanchéité du compartiment de pompage (1b) il est nécessaire de prévoir son refroidissement afin d'éviter tout échauffement du moteur de la pompe. Dans ce but, le compartiment de pompage (1b) est en communication, au niveau de sa partie arrière, avec une goulotte (1d) en communication avec l'air extérieur. Les deux compartiments (1a) et (1b) sont obturés par un couvercle (15) notamment en deux parties (15a) et (15b) correspondant au compartiment d'aspiration et au compartiment de pompage, en incluant la goulotte (1d).

Compte tenu du problème posé de l'aération du compartiment (1b) et de la mise en communication de la goulotte (1d) avec l'air libre, la partie du couvercle (15b) présente au niveau de ladite goulotte (1d), une pluralité de perforations (15c).

Suivant une autre caractéristique, le couvercle (15), plus particulièrement la partie (15a) située du côté du compartiment de filtration est profilée pour assurer une continuité avec la margelle du bassin de la piscine, lorsque l'ensemble du bloc est fixé en combinaison et en continuité avec les différents panneaux adjacents constituant le bassin de la piscine.

Bien évidemment, l'ensemble du bloc compact, tel que défini selon les caractéristiques de l'invention, est susceptible de présenter tout type d'aménagement parfaitement connu, tel que marche d'escalier, projecteur, rampe d'accès...

Les avantages ressortent bien de la description, en particulier on souligne et on rappelle la possibilité d'utiliser indifféremment le bloc de filtration d'une manière rapportée par rapport aux parois d'un bassin de piscine déjà existant ou bien de l'assembler en combinaison et en continuité avec les panneaux constituant le bassin de la piscine.

## Revendications

1. Bloc compact de filtration pour bassin de piscine comprenant :
- un compartiment (1a) de filtration recevant des moyens (2) de filtration et destiné à être en communication avec l'eau du bassin,
- un compartiment (1b) de pompage recevant des moyens (4) d'aspiration et de refoulement de l'eau du bassin en combinaison avec les moyens (2a) de filtration, lequel compartiment est destiné à être positionné à l'extérieur du bassin de la piscine,
- les deux compartiments (1a, 1b) délimitant transversalement un profil en section apte à chevaucher les parois du bassin de la piscine,
- le compartiment de filtration (1a) en communication avec l'eau du bassin, présentant des agencements de fixation avec des panneaux constituant les parois du bassin de la piscine, **caractérisé en ce que** :
- les deux compartiments (1a, 1b) sont séparés par une paroi étanche (9) pour éviter le passage de l'eau du compartiment de filtration dans le compartiment de pompage, de manière à rendre étanche ledit compartiment de pompage par rapport au compartiment de filtration,
- la paroi de séparation (9) présente des agencements de raccordement étanche avec des conduites d'aspiration (7) et de refoulement (8) reliant les moyens de filtration (2) et les moyens d'aspiration et de refoulement (4),
- le compartiment de pompage (1b) est en communication au niveau de sa partie arrière, avec une goulotte (1d) en communication avec l'air extérieur,
- les deux compartiments (1a, 1b) sont obturés par un couvercle amovible (15) présentant, au niveau de la goulotte (1d), une pluralité de perforations (15c) afin de mettre en communication ladite goulotte (1d) avec l'air extérieur.

2. Bloc selon la revendication 1, **caractérisé en ce que** les agencements de raccordement sont constitués par un manchon (10) traversant la paroi (9) et présentant des éléments de positionnement et de fixation étanche par rapport à ladite paroi, les extrémités libres dudit manchon, situées de part et d'autre de ladite paroi, étant agencés pour permettre l'accouplement étanche des conduites (7, 8).

3. Bloc selon la revendication 1, **caractérisé en ce que** le couvercle (15) est profilé à son extrémité située du côté du compartiment de filtration, pour assurer une continuité avec la margelle du bassin de la piscine.

## Patentansprüche

1. Kompaktfilterblock für Schwimmbecken bestehend aus:
- einem Filterfach (1a), das die Filtereinrichtungen (2) aufnimmt und mit dem Wasser des Beckens in Verbindung steht,
- einem Pumpfach (1b) mit den Saug- und Fördereinrichtungen (4) des Beckenwassers in Verbindung mit den Filtereinrichtungen (2a), wobei dieses Fach außerhalb des Schwimmbeckens zu positionieren ist, wobei
- die beiden Fächer (1a, 1b) querliegend ein Profil mit einem Querschnitt aufweisen, der für das Aufsetzen auf die Beckenwände des Schwimmbads geeignet ist,
- das mit dem Wasser des Beckens in Verbindung stehende Filterfach (1a) Vorkehrungen für die Befestigung mit den die Wände des Schwimmbeckens bildenden Platten aufweist,
**dadurch gekennzeichnet, dass**:
- die beiden Fächer (1a, 1b) durch eine dichte Wand (9) getrennt sind, um den Durchfluss des Wassers aus dem Filterfach in das Pumpfach zu verhindern und so das Pumpfach gegenüber dem Filterfach abzudichten,
- die Trennwand (9) Vorkehrungen für einen dichten Anschluss an die Saug- (7) und Förderleitungen (8) aufweist, die die Filtereinrichtungen (2) mit den Saug- und Fördereinrichtungen (4) verbinden,
- das Pumpfach (1b) im Bereich des hinteren Teils mit einer Rinne (1d) verbunden ist, die mit der Außenluft in Verbindung steht,
- die beiden Fächer (1a, 1b) durch einen abnehmbaren Deckel (15) verschlossen sind, der im Bereich der Rinne (1d) mehrere Löcher (15c) aufweist, um die Rinne (1d) mit der Außenluft in Verbindung zu setzen.

2. Block nach Anspruch 1, **dadurch gekennzeichnet, dass** die Anschlussvorkehrungen aus einer Muffe (10) bestehen, die die Wand (9) durchquert und Bauteile für die Positionierung und dichte Befestigung gegenüber der Wand aufweist, wobei die beiderseits der besagten Wand gelegenen freien Enden der Muffe so ausgebildet sind, um das wasserdichte Ankuppeln der Leitungen (7,8) zu ermöglichen.

3. Block nach Anspruch 1, **dadurch gekennzeichnet, dass** der Deckel (15) an seinem auf der Seite des Filterfachs gelegenen Ende so profiliert ist, um eine Kontinuität mit dem Rand des Schwimmbeckens zu gewährleisten.

## Claims

1. Compact filtration unit for a swimming pool, comprising:
- a filtration compartment (1a) containing filtration means (2) and intended to be in communication with the swimming pool water,
- a pumping compartment (1b) containing means (4) for sucking up and delivering swimming pool water in combination with the filtration means (2a), which compartment is intended to be positioned outside the pool part of the swimming pool,
- the two compartments (1a, 1b) transversely delimiting a profile in cross section capable of straddling the walls of the pool part of the swimming pool,
- the filtration compartment (1a) in communication with the swimming pool water having arrangements for attachment to the panels, of which the walls of the pool part of the swimming pool are made, **characterized in that**
- the two compartments (1a, 1b) are separated by a sealed wall (9) to prevent water from the filtration compartment from passing into the pumping compartment so as to seal the said pumping compartment with respect to the filtration compartment,
- the dividing wall (9) has arrangements for sealed connection to an intake pipe (7) and a delivery pipe (8) connecting the filtration means (2) and the intake and delivery means (4),
- the pumping compartment (1b) is in communication, at its rear part, with a spout (1d) communicating with the external air,
- the two compartments (1a, 1b) are closed off by a removable lid (15) which, in the region of the spout (1d), has a number of perforations (15c) so as to place the said spout (1d) in communication with the external air.

2. Unit according to Claim 1, **characterized in that** the connection arrangements consist of a sleeve (10) passing through the wall (9) and having elements for positioning and sealed attachment with respect to the said wall, the free ends of the said sleeve, located one on each side of the said wall, being arranged in such a way as to allow the pipes (7, 8) to be coupled in a sealed manner.

3. Unit according to Claim 1, **characterized in that** the lid (15) is shaped at its filtration-compartment end so as to ensure continuity with the edging of the pool part of the swimming pool.
